Europäisches Patentamt

European Patent Office

Office européen des brevets

(11) Veröffentlichungsnummer: **0 247 996**
**A2**

## (12) EUROPÄISCHE PATENTANMELDUNG

(21) Anmeldenummer: 87890112.3

(22) Anmeldetag: 20.05.87

(51) Int. Cl.⁴: **H 02 M 7/538**

(30) Priorität: 27.05.86 AT 1425/86

(43) Veröffentlichungstag der Anmeldung:
02.12.87 Patentblatt 87/49

(84) Benannte Vertragsstaaten:
BE CH DE ES FR GB IT LI NL SE

(71) Anmelder: **AUSTRIA Antriebstechnik G. Bauknecht
Aktiengesellschaft
G.-Bauknecht-Strasse 1
A-8740 Zeltweg-Spielberg (Steiermark)  (AT)**

(72) Erfinder: **Ott, Josef
Landschacherstrasse
A-8720 Knittelfeld-Apfelberg Steiermark  (AT)**

**Mazuheli, Robert
Neugasse 5
A-8734 Grosslobming Steiermark  (AT)**

**Hofmann, Johannes, Dipl.-Ing.
Besemerstrasse 38
A-8740 Zeltweg Steiermark  (AT)**

(74) Vertreter: **Beer, Manfred, Dipl.-Ing. et al
Patentanwälte Dipl.-Ing. Otto Beer, Dipl.-Ing. Manfred
Beer Lindengasse 8, Postfach 462
A-1071 Wien  (AT)**

(54) Drehstrommotor mit Überhitzungsschutzeinrichtung.

(57) Um einen Drehstrommotor (I) bei Überhitzungsgefahr zufolge von Überlast einfach und sicher abschalten zu können, wird ein dem aufgenommenen Motorstrom proportionales Signal aufintegriert und das so erhaltene Summensignal ständig mit einem Vergleichspegel verglichen. Bei Überschreitung des Vergleichspegels durch das aufintegrierte Summensignal wird die Stromzufuhr zum Motor (I) unterbrochen. Durch Verwendung des Spannungsabfalls an einen im Gleichstromzwischenkreis (8) des Frequenzumrichters (6) für den Drehstrommotor (I) eingeschalteten Shunts (II) ist eine einfache und gleichzeitig die Überwachung aller drei Phasen des Drehstrommotors (I) ermöglichende Ausführung gegeben.

EP 0 247 996 A2

**Beschreibung**

Drehstrommotor mit Überhitzungsschutzeinrichtung

Die Erfindung betrifft einen Drehstrommotor mit Frequenzumrichtersteuerung, wobei der Frequenzumrichter einen Gleichstromzwischenkreis aufweist, sowie mit einer Überhitzungsschutzeinrichtung, welche bei Überhitzung die Stromzufuhr abschaltet.

Bei Verwendung von Elektromotoren als Antriebsmotor in diversen Geräten und insbesonders in Haushaltsgeräten muß sichergestellt werden, daß der Motor bei im Betrieb allenfalls auftretenden Überlastungen keine zu hohen Temperaturen annehmen kann, damit einerseits Beschädigungen des Geräts und andererseits Verletzungen von Bedienungspersonen mit Sicherheit vermieden werden. Derartige Überlastungen des Antriebsmotors können beispielsweise von Lagerschäden oder auch von Fehlbedienungen herrühren - so führt eine Überladung einer Haushaltswaschmaschine über ein gewisses tolerierbares Maß hinaus mit einiger Sicherheit während des Programms zu einem unzulässigen Überhitzen des Motors.

Bei bekannten Anordnungen der eingangs genannten Art werden üblicherweise im Motor eingebaute Thermoschutzkontakte verwendet, die beispielsweise mit Bimetallen arbeiten, die bei Überschreiten von bestimmten Temperaturen eine Unterbrechung des Stromflusses zum Antriebsmotor herbeiführen. Derartige Thermoschutzkontakte sind aber einerseits relativ teure zusätzliche Bauteile und andererseits in ihrer Funktion sehr stark von Ort und Art des Einbaus abhängig, so daß eine zuverlässige Funktion nur relativ schwer realisiert werden kann.

Aufgabe der vorliegenden Erfindung ist es, eine Anordnung der eingangs besprochenen Art so auszubilden, daß die genannten Nachteile der bekannten Anordnungen vermieden werden und daß insbesonders ohne großen Bauteilaufwand mit Sicherheit eine Überhitzung des Elektromotors bei gleichzeitiger Ausnutzung des zulässigen Spielraums für die Betriebstemperatur vermieden werden kann.

Dies wird gemäß der vorliegenden Erfindung dadurch erreicht, daß die Überhitzungsschutzeinrichtung mit der Stromversorgung des Motors in Verbindung steht und mit einem dem aufgenommenen Motorstrom proportionalen Signal versorgt ist, daß das dem aufgenommenen Motorstrom proportionale Signal über einen Shunt im Gleichstromzwischenkreis abgeleitet ist, daß in der Überhitzungsschutzeinrichtung eine Integrationseinheit vorgesehen ist, welcher dieses Signal zugeführt ist und daß die Integrationseinheit mit einer Vergleichseinheit verbunden ist, welche bei Überschreitung eines vorzugsweise drehzahlabhängig veränderbaren Vergleichspegels durch das aufintegrierte Summensignal der Integrationseinheit eine angeschlossene Abschalteinheit für die Stromzufuhr auslöst. Da für jeden Betriebszustand eines Elektromotors dessen Stromaufnahme im normalen Betriebsfall eine bestimmte Größe ist, kann aus einer Zunahme dieser Stromaufnahme auf eine dem Elektromotor mehr Leistung abverlangende Funktionsunregelmäßigkeit und damit letztendlich auf eine Erwärmung geschlossen werden. Da diese Erwärmung sich aber normalerweise erst nach einer bestimmten ununterbrochenen Betriebszeit zu einer tatsächlichen Überhitzung auswächst, kann durch die beschriebene Aufintegrierung des dem aufgenommenen Motorstrom proportionalen Signals einerseits der zulässige Spielraum für die Erwärmung des Motors voll ausgenutzt und andererseits zuverlässig eine Überhitzung vermieden werden. Vom beschriebenen Prinzip her ist es demgemäß auch gleichgültig, ob eine kurzzeitige, starke Zunahme des aufgenommenen Motorstroms vorliegt oder eine nur geringfügige aber lang andauernde. In beiden Fällen wird bei Überschreitung der zulässigen Erwärmung zuverlässig über die Überhitzungsschutzeinrichtung die Stromzufuhr abgeschaltet.

Die Abschalteinheit kann dabei auch zum Rückstellen der Integrationseinheit über einen Reset-Eingang dienen und ein Zeitschaltglied in Gang setzen, welches bis zum Ablauf einer bestimmten Abkühlzeit die Wiedereinschaltung des Elektromotors verhindert. Damit kann auch ohne eine für eine Bedienungsperson auffällige Wareneinrichtung kein Wiedereinschalten eines soeben wegen Überhitzung selbsttätig von der Überhitzungsschutzeinrichtung ausgeschalteten Elektromotors vorgenommen werden, bevor nicht zumindest wieder eine entsprechende Abkühlung des Motors stattfinden konnte. Eine Störungsmeldung kann natürlich auch separat bzw. zusätzlich vorgesehen sein.

Der Vergleichspegel der Vergleichseinheit kann, wie erwähnt, drehzahlabhängig veränderbar sein, was insbesonders für im normalen Betrieb mit verschiedenen Drehzahlen laufenden Elektromotoren - wie beispielsweise bei Verwendung des Drehstrommotors als Antriebsmotor einer Waschmaschine - sehr vorteilhaft ist und die Berücksichtigung der für die verschiedenen Drehzahlen im Normalbetrieb erforderlichen Leistungen und damit Stromaufnahmen auf einfache Weise erlaubt.

Durch die Ableitung des dem aufgenommenen Motorstrom proportionalen Signals über einen Shunt aus dem Gleichstromzwischenkreis des Frequenzumrichters kann unabhängig von der Phasenzahl des für den Motor verwendeten Drehfelds mit einer einfachen und kostengünstigen Überwachung eines einzelnen, dem insgesamt aufgenommenen Motorstrom proportionalen Signals das Auslangen gefunden werden - beim Drehstrommotor müssen bei Verwendung der eingangs angesprochenen Thermoschutzkontakte zumindest zwei davon, je einer für je eine Phase, verwendet werden.

Das Merkmal, daß die Überhitzungsschutzeinrichtung mit der Stromversorgung des Motors in Verbindung steht und mit einem dem aufgenommenen Motorstrom proportionalen Signal versorgt ist, ist an sich z.B. aus dem Artikel "AEG-Mitteilungen" bzw. auch aus der DE-A-33 II 771 als bekannt anzusehen. Ebenso sind Vergleichseinheiten an sich natürlich bekannt, hier z.B. aus der genannten DE-A.

Durch die erfindungsgemäße Aufintegration des über einen Shunt im Gleichstromzwischenkreis gemeinsam erfaßten, dem an sich dreiphasigen Motorstrom proportionalen Signals wird in sehr vorteilhafter Weise die Vorbelastung des Motors berücksichtigt, während gemäß der genannten DE-A-33 11 771 lediglich Überlastgrenzen bei verschiedenen Betriebszuständen berücksichtigt werden können. In dem oben an erster Stelle genannten Artikel aus "AEG-Mitteilungen" wird explizit darauf hingewiesen, daß die Abschaltung immer unabhängig von der Vorbelastung des Motors ermöglicht wird.

Der Vollständigkeit halber sei hier auch darauf hingewiesen, daß im Rahmen der Erfindung natürlich einzelne oder mehrere Teile der beschriebenen Überhitzungsschutzeinrichtung in bzw. mit einem Mikroprozessor realisiert sein können und daß unter Umständen auch ein für sonstige Steuerzwecke der mit dem Drehstrommotor betriebenen Einrichtung ohnedies bereits vorhandener Mikroprozessor dazu herangezogen werden kann.

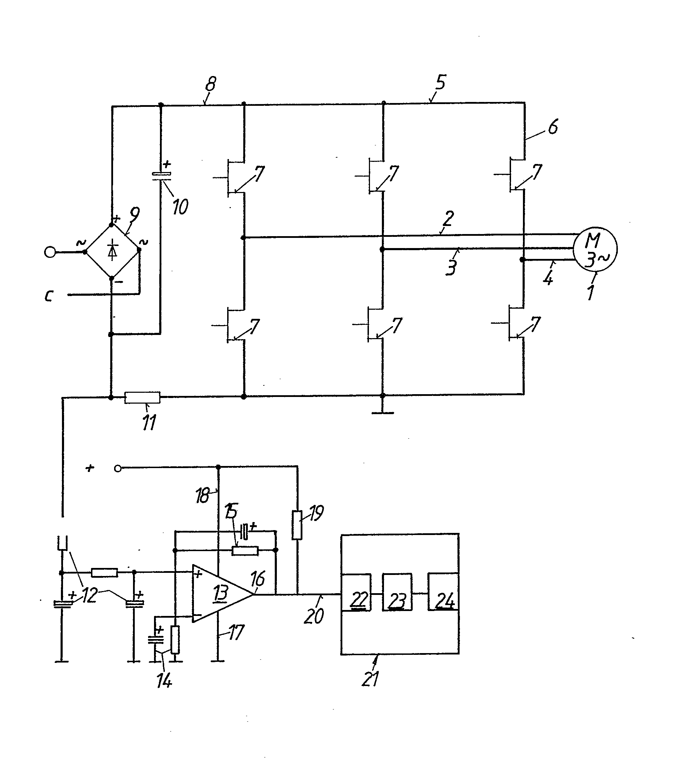

Die Erfindung wird im folgenden anhand des in der Zeichnung in einem teilweise schematischen Schaltbild dargestellten Ausführungsbeispiels näher erläutert.

Ein als Drehstrom-Asynchronmotor ausgebildeter Elektromotor 1 ist über Versorgungsleitungen 2, 3, 4 mit der Drehstrombrücke 5 eines Frequenzumrichters 6 verbunden, dessen sechs Leistungstransistoren 7 auf hier nicht weiter dargestellte Weise so kontinuierlich umsteuerbar sind, daß aus der Gleichspannung des Gleichstromzwischenkreises 8 das zum Betrieb des Elektromotors 1 erforderliche Drehfeld erzeugt werden kann. Der Gleichstromzwischenkreis 8 ist eingangsseitig über einen Gleichrichter 9 vom Wechselstromnetz her versorgt; parallel zu den Gleichspannungsanschlüssen des Gleichrichters 9 ist noch ein Siebkondensator 10 vorgesehen.

Im Gleichstromzwischenkreis 8 ist ein Shunt 11 eingeschaltet, einerseits über den unteren Brückenzweig der Drehstrombrücke 5 an Masse gelegt ist und andererseits über ein zweistufiges R-C-Filter 12 mit dem (+)-Eingang eines Verstärkers 13 verbunden ist. Der (-)-Eingang des Verstärkers 13 liegt dabei einerseits über eine weitere R-C-Kombination 14 an Masse und ist andererseits über die R-C-Kombination 15 mit dem Ausgang 16 des Verstärkers 13 rückgekoppelt. Die Spannungsversorgung des Verstärkers 13 erfolgt über Leitungen 17, 18, wobei die an der positiven Versorgungsspannung liegende Leitung 18 auch über einen weiteren Widerstand 19 zum Ausgang 16 des Verstärkers verbunden ist.

Das im Betrieb des Elektromotors 1 am Shunt 11 im Gleichstromzwischenkreis 8 abfallende Spannungssignal wird somit über den Verstärker 13 - nach entsprechender Filterung durch die beschriebenen R-C-Filter - verstärkt und steht am Ausgang 16 als Gleichstromsignal mit überlagertem Wechselanteil zur Verfügung. Dieses dem vom Elektromotor 1 aufgenommene Strom proportionale Signal wird über die Leitung 20 einer Überhitzungsschutzeinrichtung 21 zugeführt. In dieser ist eine Integrationseinheit 22 vorgesehen, der das Signal der Leitung 20 zugeführt ist und die dieses auf hier nicht weiter interessierende Weise aufintegriert. Die Integrationseinheit 22 ihrerseits ist mit einer Vergleichseinheit 23 in der Überhitzungsschutzeinrichtung 21 verbunden, welche bei Überschreitung eines auf hier nicht weiter dargestellte Weise gegebenenfalls auch abhängig von der Drehzahl des Elektromotors 1 veränderbaren Vergleichspegels durch das aufintegrierte Summensignal der Integrationseinheit 22 eine angeschlossene Abschalteinheit 24 auslöst. Diese Abschalteinheit 24 kann beispielsweise - hier nicht dargestellt - direkt auf die Wechselspannungsanschlüsse am Gleichrichter 9 oder auch erst auf den Gleichstromzwischenkreis 8 einwirken und die Stromzufuhr zum Elektromotor 1 unterbrechen, wenn über die Größe des aufgenommenen Stroms eine Überhitzung desselben festgestellt wird.

Die Abschalteinheit 24 könnte auch - auf hier ebenfalls nicht dargestellte Weise - zum Rückstellen der Integrationseinheit über einen Reset-Eingang dienen und ein Zeitschaltglied in Gang setzen, welches bis zum Ablaufen einer bestimmten Abkühlzeit die Wiedereinschaltung des Elektromotors verhindert.

Ohne Beeinflussung der beschriebenen Funktion könnten einzelne der genannten Bauteile bzw. Schaltungsgruppen natürlich auch in einem Mikroprozessor od.dgl. realisiert sein, wobei dieser auch andere Aufgaben bei der Steuerung einer mit dem Elektromotor 1 als Antriebsmotor ausgerüsteten Maschine übernehmen könnte.

**Patentansprüche**

Drehstrommotor (1) mit Frequenzumrichtersteuerung, wobei der Frequenzumrichter (6) einen Gleichstromzwischenkreis (8) aufweist, sowie mit einer Überhitzungsschutzeinrichtung (21), welche bei Überhitzung die Stromzufuhr abschaltet, dadurch gekennzeichnet, daß die Überhitzungsschutzeinrichtung (21) mit der Stromversorgung des Motors (1) in Verbindung steht und mit einem dem aufgenommenen Motorstrom proportionalen Signal versorgt ist, daß das dem aufgenommenen Motorstrom proportionale Signal über einen Shunt (11) im Gleichstromzwischenkreis (8) abgeleitet ist, daß in der Überhitzungsschutzeinrichtung (21) eine Integrationseinheit (22) vorgesehen ist, welcher dieses Signal zugeführt ist und daß die Integrationseinheit (22) mit einer Vergleichseinheit (23) verbunden ist, welche bei Überschreitung eines vorzugsweise drehzahlabhängig veränderbaren Vergleichspegels durch das aufintegrierte Summensignal der Integrationseinheit (22) eine angeschlossene Abschalteinheit (24) für die Stromzufuhr auslöst.